(19) **Europäisches Patentamt / European Patent Office / Office européen des brevets**

(11) **EP 3 273 277 B1**

(12) **EUROPEAN PATENT SPECIFICATION**

(45) Date of publication and mention
of the grant of the patent:
**10.05.2023  Bulletin 2023/19**

(21) Application number: **17173966.7**

(22) Date of filing: **01.06.2017**

(51) International Patent Classification (IPC):
**G01V 5/00** *(2006.01)*

(52) Cooperative Patent Classification (CPC):
**G01V 5/0016**

(54) **METHOD AND SYSTEM FOR SECURITY INSPECTION**

VERFAHREN UND SYSTEME ZUR SICHERHEITSINSPEKTION

PROCÉDÉ ET SYSTÈME D'INSPECTION DE SÉCURITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2016  CN 201610589362**

(43) Date of publication of application:
**24.01.2018  Bulletin 2018/04**

(73) Proprietor: **Nuctech Company Limited
TongFang Building,
Shuangqinglu,
Haidian District
Beijing 100084 (CN)**

(72) Inventors:
• **CHEN, Zhiqiang
BEIJING, 100084 (CN)**
• **LI, Yuanjing
BEIJING, 100084 (CN)**
• **SUN, Shangming
BEIJING, 100084 (CN)**
• **LI, Juxuan
BEIJING, 100084 (CN)**
• **LI, Wanhui
BEIJING, 100084 (CN)**
• **YU, Weifeng
BEIJING, 100084 (CN)**

(74) Representative: **Cabinet Beau de Loménie
158, rue de l'Université
75340 Paris Cedex 07 (FR)**

(56) References cited:
EP-A1- 3 018 499          CN-A- 101 162 209
CN-A- 105 652 332      US-A1- 2013 230 139
US-A1- 2015 338 545    US-B2- 8 295 433

**Description**

**TECHNICAL FIELD**

The present invention relates to the field of security inspection, and more particularly, to a method and a system for security inspection using a scanning accelerator.

**BACKGROUND**

With the rapid increase in trades between countries around the world, and the increasingly serious international security situation, security inspection systems now have become indispensible systems for national customs, airports, stations and other public places.

An accelerator is a ray source which generates X-rays by utilizing a magnetic field or an electric field to accelerate electrons shooting a target. Accelerators are widely applied in security systems, especially in systems for inspecting large containers. Since they have high energy, excellent penetrating effects and safe for transportation, and have no pollution incurred, accelerators are more and more favored by users.

In a system for fast inspecting a category, application of the accelerator is becoming more and more common. Moreover, since the inspection is fast, a train is driven by a driver to pass through a scanning channel. Then, it is must be ensured that the accelerator must be controlled to emit a beam when the person on the vehicle is safe. In addition, in this case, it is necessary to further improve the quality of the scanned image, in order to improve the accuracy of the inspection.

Therefore, the following problems arise in the related art: when the speed of the vehicle is changing in real time, how to control the speed of the accelerometer to ensure that the scanned image is not deformed; in the process of passive scanning, how to control the timing for the accelerator to emit a beam; how to ensure the safety of the persons on the trains against rays during the scanning process; how to gradually increase the dose of the accelerator when scanning the image; and how to determine a real-time air value of different frequencies required by image processing for each train scanned.

US2013/230139 shows a method for performing security inspection on a train with a scanning device comprising an accelerator and a detector, entailing: measuring a moving speed of the train with respect to the scanning device and adjusting a beam-emitting frequency of the accelerator according to the moving speed and wherein the beam-emitting frequency is determined by the following formula: f = vKb/ad where a denotes a distance from a target point of the accelerator to a center line of the train, b denotes a distance from the target point of the accelerator to the detector, v denotes a vehicle speed, denotes a width of a cross section of the detector along a moving direction of the train, f denotes the beam-emitting frequency of the accelerator, and K denotes an oversampling parameter.

EP3018499 shows taking into account a space of the air before the head and after the end of the vehicle.

The above information disclosed in this Background section is for the purpose of reinforcing the understanding of the background of the present disclosure and therefore can include information that does not constitute prior art known to those of ordinary skill in the art.

**SUMMARY**

In view of one or more of the above problems, the present application discloses a method and a system for security inspection, as well as a computer program, according to claims 1, 3 and 7, respectively, which are capable of further improving the quality of scanned images.

Other features and advantages of the present disclosure will become apparent from the following detailed description, or in part, may be learned from practice of the present disclosure.

According to one aspect of the present disclosure, there is provided a method for security inspection, according to claim 1.

According to an embodiment, the beam-emitting frequency is determined by the following formula:

$$f = vKb/ad$$

where a denotes a distance from a target point of the accelerator to a center line of the train, b denotes a distance from the target point of the accelerator to the detector, V denotes a vehicle speed, d denotes a width of a cross section of the detector along a moving direction of the train, f denotes the beam-emitting frequency of the accelerator, and K denotes an oversampling parameter.

According to another aspect of the present disclosure, there is provided a system for security inspection, according to claim 3.

Further embodiments are provided by the dependent claims.

**BRIEF DESCRIPTION OF THE DRAWINGS**

The above and other features and advantages of the present disclosure will become more apparent by describing in detail the embodiments thereof with reference to the accompanying drawings.

Fig. 1 schematically illustrates the principle of matching a beam-emitting frequency of an accelerator with a speed of a train according to the present disclosure;
Fig. 2 illustrates a flow chart of a method for security inspection according to an embodiment of the present disclosure;
Fig. 3 illustrates a block diagram of a system for security inspection according to an embodiment of the present disclosure;

Fig. 4 illustrates a flow chart of a method for security inspection according to another embodiment of the present disclosure;

Fig. 5 illustrates a block diagram of a system for security inspection according to another embodiment of the present disclosure; and

Fig. 6 illustrates a block diagram of a system for security inspection according to another embodiment of the present disclosure.

## DETAILED DESCRIPTION

The embodiments will now be described more fully with reference to accompanying drawings. However, the embodiments may be embodied in many forms and should not be construed as limited to the embodiments set forth herein. Rather, providing such embodiments makes the present disclosure thorough and complete, and will fully convey the concepts of the embodiments to those skilled in the art. The same reference numerals in the drawings denote the same or similar parts, and thus repeated description thereof will be omitted.

In addition, the features, structures, or characteristics described may be combined in one or more embodiments in any suitable manner. In the following description, many specific details are provided to give a full understanding of the embodiments of the present disclosure. However, those skilled in the art will appreciate that one or more of these specific details may be practiced without practicing the technical solutions of the present disclosure, or other methods, components, materials, devices, steps, and the like may be employed. In other instances, well-known structures, methods, devices, implementations, materials, or operations are not shown or described in detail to avoid obscuring aspects of the present disclosure.

The block shown in the figures merely denotes a functional entity and does not necessarily have to correspond to a physically separate entity. That is, these functional entities may be implemented in software form or may be implemented in one or more software-hardened modules as these functional entities or a part of the functional entities, or in various networks and/or processor devices and/or microcontrollers, to implement these functional entities.

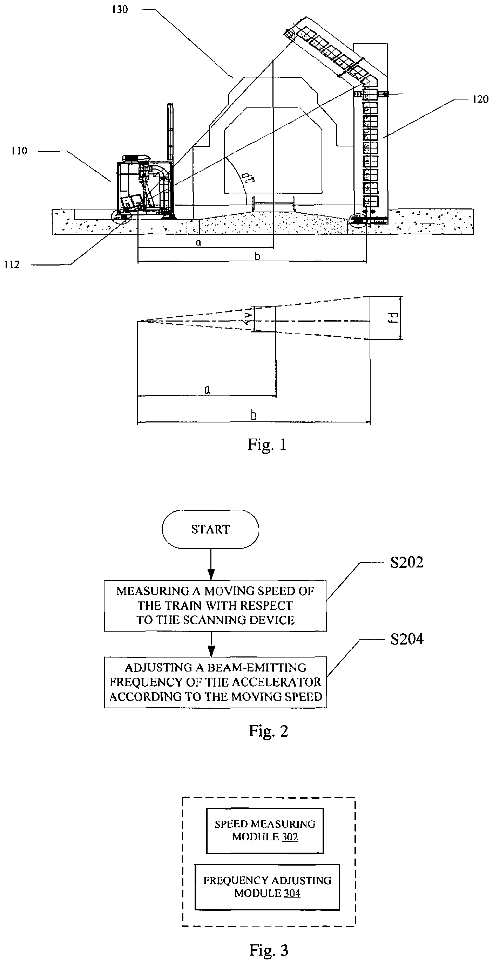

Fig. 1 schematically illustrates the principle of matching a beam-emitting frequency of an accelerator with a speed of a train according to the present disclosure.

Referring to Fig. 1, a distance from a target point 112 of an accelerator 110 to a center line of a train 130 is denoted as *a.* A distance from the target point 112 of the accelerator 110 to a detector 120 is denoted as *b.* A vehicle speed is denoted as *V.* A width of a cross section of the detector 120 is denoted as *d.* A beam-emitting frequency of the accelerator is denoted as *f. K* denotes an oversampling parameter. According to the principle of similar triangular:

$$a/b = Kv/fd,$$

then the beam-emitting frequency of the accelerator is: f = vKb/ad.

According to the above corresponding relationship between the beam-emitting frequency of the accelerator and the train speed, it is possible to control the beam-emitting frequency of the accelerator according to the vehicle speed during the scanning process. Thus, since the vehicle speed is matched with the beam-emitting frequency of the accelerator, the deformation of the scanned image can be reduced or eliminated, and the accuracy of the security inspection can be further improved.

The train speed can be measured in a variety of ways. The train speed can be directly measured by a speed sensor such as a speed radar disposed near a linear array camera. Alternatively, the train speed can also be measured by measuring two time instances when the train passes two position sensors such as two ground induction coils (wheel-rim sensors) and/or photoelectric switches and/or electronic light curtains and measuring a distance between the two sensors. The train speed can be measured with a variety of existing known methods for measuring speed, which will not repeated herein.

Fig. 2 illustrates a flow chart of a method for security inspection according to an embodiment of the present disclosure.

The method as shown in Fig. 2 is used for security inspection on a train with a scanning device. The scanning device includes an accelerator and a detector. Hereinafter, the method for security inspection according to an embodiment of the present disclosure will be described with reference to Fig. 2. It should be noted that, Fig. 2 only schematically illustrates steps involved in the method according to the embodiment of the present disclosure, which is not for limitation.

Referring to Fig. 2, at step S202, a moving speed of the train with respect to the scanning device is measured. As described above, the train speed can be measured in a variety of ways. The train speed can be directly measured by a speed sensor such as a speed radar disposed near a linear array camera. Alternatively, the train speed can also be measured by measuring two time instances when the train passes two position sensors such as two ground induction coils (wheel-rim sensors) and/or photoelectric switches and/or electronic light curtains and measuring a distance between the two sensors. The train speed can be measured with a variety of existing known methods for measuring speed, which will not repeated herein.

According to some embodiments, the beam-emitting frequency can be determined by the following formula:

$$f = vKb/ad,$$

where a denotes a distance from a target point of the accelerator to a center line of the train, b denotes a distance from the target point of the accelerator to the detector, $l$ denotes a vehicle speed, $d$ denotes a width of a cross section of the detector along a moving direction of the train, $f$ denotes the beam-emitting frequency of the accelerator, and $K$ denotes an oversampling parameter.

Fig. 3 illustrates a block diagram of a system for security inspection according to an embodiment of the present disclosure.

Referring to Fig. 3, the system for security inspection includes a speed measuring module 302 and a frequency adjusting module 304.

The speed measuring module 302 is configured to measure a moving speed of the train with respect to the scanning device. As described above, the train speed can be measured in a variety of ways. The train speed can be directly measured by a speed sensor such as a speed radar disposed near a linear array camera. Alternatively, the train speed can also be measured by measuring two time instances when the train passes two position sensors such as two ground induction coils (wheel-rim sensors) and/or photoelectric switches and/or electronic light curtains and measuring a distance between the two sensors. The train speed can be measured with a variety of existing known methods for measuring speed, which will not repeated herein. The speed measuring module 302 can obtain signals sent by the speed sensor or the wheel-rim sensor or the like, and thus the train speed can be measured.

The frequency adjusting module 304 is configured to adjust a beam-emitting frequency of the accelerator according to the moving speed. As described above, the frequency adjusting module 304 can obtain the beam-emitting frequency according to the following formula and issue a control instruction:

$$f = vKb/ad$$

where a denotes a distance from a target point of the accelerator to a center line of the train, $b$ denotes a distance from the target point of the accelerator to the detector, $V$ denotes a vehicle speed, $d$ denotes a width of a cross section of the detector along a moving direction of the train, $f$ denotes the beam-emitting frequency of the accelerator, and $K$ denotes an oversampling parameter.

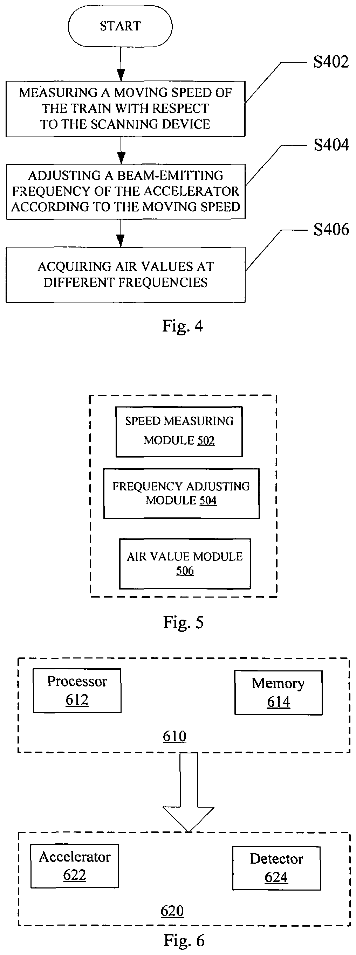

Fig. 4 illustrates a flow chart of a method for security inspection according to another embodiment of the present disclosure.

Referring to Fig. 4, the method shown in Fig. 4 is substantially the same as that shown in Fig. 2, the difference between them is that the method shown in Fig. 4 further includes step S406. In step S406, air values at different frequencies are acquired.

When the train is scanned every time, the beam-emitting frequency is different due to different speed. In order to improve the quality of the images, real-time air values at different frequencies can be obtained before the scanning. Since it is not sure when the train will come, and once the train comes, there is not enough time to acquire the air values, the air values can generally be acquired after the images for the previous train has been scanned, so as to obtain multi-frequency air real-time data as a calibration value for scanning the next train. In this way, the quality of the images can be improved while improving the scanning efficiency.

When a tail of a train has left a curtain of a scanning channel, the system controls the accelerator to emit a beam for a second time, to perform a static multi-frequency air process, in order to acquire air values at different frequencies for scanning the next train.

Fig. 5 illustrates a block diagram of a system for security inspection according to another exemplary embodiment of the present disclosure.

Referring to Fig. 5, the system shown in Fig. 5 is substantially the same as that shown in Fig. 3, the difference between them is that the system shown in Fig. 5 further includes an air value module 506. As described above, the air value module 506 is configured to, when the train is a cargo train and when a tail of the train has left a scanning channel used for security inspection, control the accelerator to emit a beam for a second time to perform a static multi-frequency air process, in order to acquire air values at different frequencies for subsequently scanning.

Fig. 6 illustrates a block diagram of a system for security inspection according to another embodiment of the present disclosure.

Referring to Fig. 6, the system for security inspection according to an embodiment of the present disclosure includes a control device 610 and a scanning device 620. The scanning device 620 includes an accelerator 622 and a detector 624, configured to perform security inspection on the train. The control device 610 includes a processor 612 and a memory 614. The memory 614 is configured to store instruction codes. The instruction codes are executed by the processor 612 to cause the control device 610 to control the scanning device 620 to perform: measuring a moving speed of the train with respect to the scanning device; and adjusting a beam-emitting frequency of the accelerator according to the moving speed.

As described above, according to some embodiments, the beam-emitting frequency is determined by the following formula: f = vKb/ad,

where $a$ denotes a distance from a target point of the accelerator to a center line of the train, $b$ denotes a distance from the target point of the accelerator to the detector, *V* denotes a vehicle speed, *d* denotes a width of a cross section of the detector along a moving direction of the train, *f* denotes the beam-emitting frequency of the accelerator, and *K* denotes an oversampling parameter.

The instruction codes also cause the control device to perform following operations: when the train is a cargo train and when a tail of the train has left a scanning channel used for security inspection, controlling the accelerator to emit a beam for a second time to perform a static multi-frequency air process in order to acquire air values at different frequencies.

From the above description, it can be understood by those skilled in the art that, the system and the method according to the embodiment of the present disclosure has one or more of the following advantages.

The beam-emitting frequency can be controlled in real time, so that the beam-emitting frequency can be matched with the train speed, and thus the quality of scanned images can be improved.

The acquisition is performed after the images for the previous train have been scanned, so as to obtain multi-frequency air real-time data as a calibration value for scanning the next train. In this way, the quality of the images can be improved while improving the scanning efficiency.

With the description of the above embodiments, it will be readily understood by those skilled in the art that the method and corresponding modules of the embodiments of the present disclosure may be implemented by software or partially by hardening software. Thereof, the technical solution of the embodiments of the present disclosure may be embodied in the form of a software product which may be stored in a nonvolatile storage medium (which may be a CD-ROM, a U disk, a mobile hard disk, etc.), including several instructions, to cause a computing device (which may be a personal computer, a server, a mobile terminal, or a network device, etc.) to perform a method according to an embodiment of the present disclosure.

It will be understood by those skilled in the art that the drawings are merely schematic diagrams of exemplary embodiments and that the modules or processes in the drawings are not necessarily essential to implement the present disclosure and are therefore not intended to limit the scope of the present disclosure.

It will be understood by those skilled in the art that the above-described modules may be distributed in the device in accordance with the description of the embodiments, or may be modified in one or more devices different from the present embodiments. The modules of the above embodiments may be combined into one module or may be further divided into a plurality of sub-modules.

**Claims**

1. A method for security inspection, for performing security inspection on a train with a scanning device comprising an accelerator and a detector, the method for security inspection comprising:

measuring (S202, S402) a moving speed of the train with respect to the scanning device; and adjusting (S204, S404) a beam-emitting frequency of the accelerator according to the moving speed,
the method being **characterized in that**,
when the train is a cargo train and when a tail of the train has left a scanning channel used for security inspection, controlling the accelerator to emit a beam for a second time to perform a static multi-frequency air process in order to acquire (S406) air values at different frequencies.

2. The method for security inspection according to claim 1, wherein the beam-emitting frequency is determined by the following formula:

$$f = vKb/ad$$

where a denotes a distance from a target point of the accelerator to a center line of the train, b denotes a distance from the target point of the accelerator to the detector, *V* denotes a vehicle speed, *d* denotes a width of a cross section of the detector along a moving direction of the train, *f* denotes the beam-emitting frequency of the accelerator, and K denotes an oversampling parameter.

3. A system for security inspection, for performing security inspection on a train, the system comprising:

a scanning device comprising an accelerator (622) and a detector (624) configured to perform security inspection on a train;
a speed measuring module (302, 502) configured to measure a moving speed of the train with respect to the scanning device; and
a frequency adjusting module (304, 504) configured to adjust a beam-emitting frequency of the accelerator according to the moving speed,
an air value module (506) configured to, when the train is a cargo train and when a tail of the train has left a scanning channel used for security inspection, control the accelerator to emit a beam for a second time to perform a static multi-frequency air process in order to acquire air values at different frequencies, and
a control device, comprising:

a processor (612); and
a memory (614) having stored thereon instruction codes which when said instruction codes are executed by the processor cause the control device to perform:

> measuring (S202, S402) a moving speed of the train with respect to the scanning device;
> adjusting (S204, S404) a beam-emitting frequency of the accelerator according to the moving speed, and controlling the accelerator to emit a beam for a second time, when the train is a cargo train and when a tail of the train has left a scanning channel used for security inspection, to perform a static multi-frequency air process in order to acquire air values at different frequencies.

4. The system for security inspection according to claim 3, wherein the beam-emitting frequency is determined by the following formula:

$$f = vKb/ad$$

where a denotes a distance from a target point of the accelerator to a center line of the train, *b* denotes a distance from the target point of the accelerator to the detector, *V* denotes a vehicle speed, *d* denotes a width of a cross section of the detector along a moving direction of the train, *f* denotes the beam-emitting frequency of the accelerator, and *K* denotes an oversampling parameter.

5. A computer program, which when executed on a processor (612) of a system for security inspection according to any one of claims 3-4, performs a method according to any one of claims 1-2.

**Patentansprüche**

1. Verfahren zur Sicherheitsinspektion, zur Durchführung einer Sicherheitsinspektion an einem Zug mit einer Abtastvorrichtung, die einen Beschleuniger und einen Detektor umfasst, wobei das Verfahren zur Sicherheitsinspektion Folgendes umfasst:

> Messen (S202, S402) einer Bewegungsgeschwindigkeit des Zuges in Bezug auf die Abtastvorrichtung; und
> Einstellen (S204, S404) einer Strahlenemissionsfrequenz des Beschleunigers in Abhängigkeit von der Bewegungsgeschwindigkeit, wobei das Verfahren **dadurch gekennzeichnet ist, dass**, wenn es sich bei dem Zug um einen Güterzug handelt und wenn ein Zugende einen für die Sicherheitsinspektion verwendeten Abtastkanal verlassen hat, der Beschleuniger so gesteuert wird, dass er ein zweites Mal einen Strahl aussendet, um einen statischen Multifrequenz-Luftprozess durchzuführen, um Luftwerte bei verschiedenen Frequenzen zu erfassen (S406).

2. Verfahren zur Sicherheitsinspektion nach Anspruch 1, wobei die Strahlenemissionsfrequenz durch die folgende Formel bestimmt wird:

$$f = vKb/ad$$

wobei a einen Abstand von einem Zielpunkt des Beschleunigers zu einer Mittellinie des Zuges bezeichnet, b einen Abstand vom Zielpunkt des Beschleunigers zum Detektor bezeichnet, *V* eine Fahrzeuggeschwindigkeit bezeichnet, deine Breite eines Querschnitts des Detektors entlang einer Bewegungsrichtung des Zuges bezeichnet, *f* die Strahlenemissionsfrequenz des Beschleunigers und *K* einen Überabtastungsparameter bezeichnet.

3. System zur Sicherheitsinspektion zur Durchführung einer Sicherheitsinspektion an einem Zug, wobei das System Folgendes umfasst:

> eine Abtastvorrichtung umfassend einen Beschleuniger (622) und einen Detektor (624), die konfiguriert ist, um eine Sicherheitsinspektion an einem Zug durchzuführen;
> ein Geschwindigkeitsmessmodul (302, 502), das konfiguriert ist, um eine Bewegungsgeschwindigkeit des Zuges in Bezug auf die Abtastvorrichtung zu messen; und
> ein Frequenzeinstellmodul (304, 504), das konfiguriert ist, um eine Strahlenemissionsfrequenz des Beschleunigers in Abhängigkeit von der Bewegungsgeschwindigkeit einzustellen,
> ein Luftwertmodul (506), das konfiguriert ist, um, wenn es sich bei dem Zug um einen Güterzug handelt und wenn ein Zugende einen für die Sicherheitsinspektion verwendeten Abtastkanal verlassen hat, den Beschleuniger so zu steuern, dass er ein zweites Mal einen Strahl aussendet, um einen statischen Multifrequenz-Luftprozess durchzuführen, um Luftwerte bei verschiedenen Frequenzen zu erfassen, und
> eine Steuervorrichtung, umfassend:

>> einen Prozessor (612); und
>> einen Speicher (614), in dem Befehlscodes gespeichert sind, die, wenn die Befehlscodes von dem Prozessor ausgeführt werden, die Steuervorrichtung veranlassen, Folgendes durchzuführen:

>>> Messen (S202, S402) einer Bewegungsgeschwindigkeit des Zuges in Bezug auf die Abtastvorrichtung; Einstellen (S204, S404) einer Strahlenemissionsfrequenz des Beschleunigers in Abhängigkeit von der Bewegungsgeschwindigkeit, und Steuern des Beschleunigers, um ein zweites Mal einen Strahl auszusenden, wenn es sich bei dem Zug um einen Güterzug handelt und wenn ein Zugende einen für die Sicherheitsinspektion verwendeten Abtastkanal verlassen hat, um einen statischen Multifrequenz-Luftprozess durchzuführen, um Luftwerte bei verschiedenen Frequenzen zu erfassen.

4. System zur Sicherheitsinspektion nach Anspruch 3, wobei die Strahlenemissionsfrequenz durch die folgende Formel bestimmt wird:

$$f = vKb/ad$$

wobei a einen Abstand von einem Zielpunkt des Beschleunigers zu einer Mittellinie des Zuges bezeichnet, b einen Abstand vom Zielpunkt des Beschleunigers zum Detektor bezeichnet, $V$ eine Fahrzeuggeschwindigkeit bezeichnet, deine Breite eines Querschnitts des Detektors entlang einer Bewegungsrichtung des Zuges bezeichnet, $f$ die Strahlenemissionsfrequenz des Beschleunigers und $K$ einen Überabtastungsparameter bezeichnet.

5. Computerprogramm, das, wenn es auf einem Prozessor (612) eines Systems zur Sicherheitsinspektion nach einem der Ansprüche 3 bis 4 ausgeführt wird, ein Verfahren nach einem der Ansprüche 1 bis 2 durchführt.

**Revendications**

1. Procédé d'inspection de sécurité, pour réaliser une inspection de sécurité dans un train avec un dispositif de balayage comprenant un accélérateur et un détecteur, le procédé d'inspection de sécurité comprenant :

la mesure (S202, S402) d'une vitesse de déplacement du train par rapport au dispositif de balayage ; et l'ajustement (S204, S404) d'une fréquence d'émission de faisceau de l'accélérateur en fonction de la vitesse de déplacement, le procédé étant **caractérisé en ce que**, lorsque le train est un train de marchandises et lorsqu'une queue du train a quitté un canal de balayage utilisé pour une inspection de sécurité, commander l'accélérateur pour émettre une seconde fois un faisceau en vue de réaliser un procédé à air à fréquence multistatique afin d'acquérir (S406) des valeurs d'air à des fréquences différentes.

2. Procédé d'inspection de sécurité selon la revendication 1, dans lequel la fréquence d'émission de faisceau est déterminée par la formule suivante :

$$f = vKb/ad$$

où a représente une distance depuis un point cible de l'accélérateur jusqu'à une ligne médiane du train, b représente une distance depuis le point cible de l'accélérateur jusqu'au détecteur, $V$ représente une vitesse de véhicule, $d$ représente une largeur d'une coupe transversale du détecteur dans une direction de déplacement du train, $f$ représente la fréquence d'émission de faisceau de l'accélérateur, et $K$ représente un paramètre de suréchantillonnage.

3. Système d'inspection de sécurité, pour réaliser une inspection de sécurité dans un train, le système comprenant :

un dispositif de balayage comprenant un accélérateur (622) et un détecteur (624) configuré pour réaliser une inspection de sécurité dans un train ; un module de mesure de vitesse (302, 502) configuré pour mesurer une vitesse de déplacement du train par rapport au dispositif de balayage ; et un module d'ajustement de fréquence (304, 504) configuré pour ajuster une fréquence d'émission de faisceau de l'accélérateur en fonction de la vitesse de déplacement, un module de valeur d'air (506) configuré pour, lorsque le train est un train de marchandises et lorsqu'une queue du train a quitté un canal de balayage utilisé pour une inspection de sécurité, commander l'accélérateur pour émettre une seconde fois un faisceau en vue de réaliser un procédé à air à fréquence multistatique afin d'acquérir des valeurs d'air à des fréquences différentes, et un dispositif de commande, comprenant :

un processeur (612) ; et une mémoire (614) présentant stockés en elle des codes d'instruction qui, lorsque lesdits codes d'instruction sont exécutés par le processeur, amènent le dispositif de commande à réaliser :

la mesure (S202, S402) d'une vitesse de déplacement du train par rapport au dispositif de balayage ;

l'ajustement (S204, S404) d'une fréquence d'émission de faisceau de l'accélérateur en fonction de la vitesse de déplacement, et

la commande de l'accélérateur pour émettre une seconde fois un faisceau, lorsque le train est un train de marchandises et lorsqu'une queue du train a quitté un canal de balayage utilisé pour une inspection de sécurité, en vue de réaliser un procédé à air à fréquence multistatique afin d'acquérir des valeurs d'air à des fréquences différentes.

4. Système d'inspection de sécurité selon la revendication 3, dans lequel la fréquence d'émission de faisceau est déterminée par la formule suivante :

$$f = vKb/ad$$

où a représente une distance depuis un point cible de l'accélérateur jusqu'à une ligne médiane du train, b représente une distance depuis le point cible de l'accélérateur jusqu'au détecteur, V représente une vitesse de véhicule, d représente une largeur d'une coupe transversale du détecteur dans une direction de déplacement du train, f représente la fréquence d'émission de faisceau de l'accélérateur, et K représente un paramètre de suréchantillonnage.

5. Programme informatique qui, lorsqu'il est exécuté par un processeur (612) d'un système d'inspection de sécurité selon l'une quelconque des revendications 3-4, réalise un procédé selon l'une quelconque des revendications 1-2.

Fig. 1

START

MEASURING A MOVING SPEED OF
THE TRAIN WITH RESPECT
TO THE SCANNING DEVICE — S202

ADJUSTING A BEAM-EMITTING
FREQUENCY OF THE ACCELERATOR
ACCORDING TO THE MOVING SPEED — S204

Fig. 2

SPEED MEASURING
MODULE 302

FREQUENCY ADJUSTING
MODULE 304

Fig. 3

START

MEASURING A MOVING SPEED OF
THE TRAIN WITH RESPECT
TO THE SCANNING DEVICE
S402

ADJUSTING A BEAM-EMITTING
FREQUENCY OF THE ACCELERATOR
ACCORDING TO THE MOVING SPEED
S404

ACQUIRING AIR VALUES AT
DIFFERENT FREQUENCIES
S406

Fig. 4

SPEED MEASURING
MODULE 502

FREQUENCY ADJUSTING
MODULE 504

AIR VALUE MODULE
506

Fig. 5

Processor
612

Memory
614

610

Accelerator
622

Detector
624

620

Fig. 6

**EP 3 273 277 B1**

## REFERENCES CITED IN THE DESCRIPTION

**Patent documents cited in the description**

- US 2013230139 A

- EP 3018499 A